# EUROPEAN PATENT APPLICATION

(11) **EP 3 859 998 A1**
(43) Date of publication of application: **04.08.2021**
(21) Application number: 19865607.6
(22) Date of filing: 20.09.2019
(51) Int. Cl.: H04B 10/077, H04J 14/02

(54) **OPTICAL TRANSMITTER AND OPTICAL RECEIVER**

(30) Priority: 27.09.2018 JP 2018181820
(71) Applicant: NEC Corporation, 108-8001 Tokyo (JP)
(72) Inventor: HARA Yasushi, Tokyo 108-8001 (JP)
(74) Representative: Vossius & Partner Patentanwälte Rechtsanwälte mbB
(86) International application number: PCT/JP2019/036867
(87) International publication number: WO 2020/066863

(57) **Abstract**

[Problem] To make it possible to perform functional setting for an optical receiver from an optical transmitter using a simple configuration.

[Solution] An optical transmitter is provided with: a first transmit circuit which generates a first optical signal including a main signal; a second transmit circuit which generates a second optical signal including a control signal; and a first combiner means which generates a channel signal in which the second optical signal is wavelength-multiplexed at one end of a wavelength band of the first optical signal.

## Description

### [Technical Field]

The present invention relates to an optical transmitter and an optical receiver, and more particularly relates to an optical transmitter and an optical receiver for wavelength-multiplexing a main signal and a control signal for transmission, an optical transmitting method, and an optical receiving method.

### [Background Art]

In a wavelength multiplexing optical transmission system of recent years, a new modulation method and forward error correction (FEC) have been introduced. By adoption of a flexible grid and introduction of optical add-drop multiplexing (OADM), a configuration of an optical signal to be accommodated in an optical line has become very complicated.

There is ITU-T Recommendation G.694.1, as international standards relating to the flexible grid. In this recommendation, a smallest channel interval on a wavelength grid is 12.5 GHz. A main signal is wavelength-multiplexed at an interval of an integer multiple of 12.5 GHz (25 GHz, 50 GHz, and the like). It is possible to determine a bandwidth of a main signal according to a transmission speed or a modulation method. ITU-T is an abbreviation of International Telecommunication Union Telecommunication Standardization Sector. In association with the present invention, PTL 1 describes a configuration in which a main signal and a control signal are multiplexed for transmission.

### [Citation List]

### [Patent Literature]

[PTL 1] Japanese Unexamined Patent Application Publication No. 2006-197489

### [Summary of Invention]

### [Technical Problem]

In an optical transmission system, it is necessary to accurately set, in an optical transmission device, a plurality of parameters relating to a main signal at a time of installing the optical transmission device (e.g., an optical transmitter and an optical receiver), or at a time of adding a wavelength of an optical signal. At this occasion, a worker who installs the optical transmitter and a worker who installs the optical receiver need to accurately set these parameters in order to enable a main signal to be transmitted between the optical transmitter and the optical receiver opposing to each other. At a time of changing specifications such as adding a wavelength of a main signal, the worker of the optical transmitter and the worker of the optical receiver also need to change the parameters, while communicating with each other. Therefore, in a general optical transmission device, there is a problem that setting parameters in an optical transmitter and an optical receiver opposing to each other is cumbersome.

### (Object of Invention)

An object of the present invention is to enable a function of an optical receiver to be set from an optical transmitter with a simple configuration.

### [Solution to Problem]

An optical transmitter according to the present invention includes: a first transmitting means for generating a first optical signal including a main signal; a second transmitting means for generating a second optical signal including a control signal; and a first multiplexing means for generating a channel signal in which the second optical signal is wavelength-multiplexed at one end of a wavelength band of the first optical signal.

An optical receiver according to the present invention includes: a first demultiplexing means for demultiplexing, from a received channel signal, a first optical signal including a main signal, and a second optical signal being wavelength-multiplexed at one end of a wavelength band of the first optical signal and including a control signal; a first receiving means for being controlled based on the control signal and demodulating a main signal from the first optical signal; and a second receiving means for demodulating the control signal from the second optical signal.

An optical transmitting method according to the present invention includes a procedure of generating a first optical signal including a main signal; generating a second optical signal including a control signal; and generating a channel signal in which the second optical signal is wavelength-multiplexed at one end of a wavelength band of the first optical signal.

An optical receiving method according to the present invention includes: a procedure of demultiplexing, from a received channel signal, a first optical signal including a main signal, and a second optical signal being wavelength-multiplexed at one end of a wavelength band of the first optical signal and including a control signal; demodulating the control signal from the second optical signal; and demodulating a main signal from the first optical signal, based on the control signal.

### [Advantageous Effects of Invention]

The present invention enables a function of an optical receiver to be set from an optical transmitter with a simple configuration.

### [Brief Description of Drawings]

[Fig. 1] Fig. 1 is a block diagram illustrating a configuration example of an optical transmission system 10 according to a first example embodiment.
[Fig. 2] Fig. 2 is a diagram illustrating an example of a channel signal, when a main optical signal is a signal having a single wavelength band.
[Fig. 3] Fig. 3 is a diagram illustrating an example of a channel signal, when a control optical signal is multiplexed at an upper end of a spectrum.
[Fig. 4] Fig. 4 is a diagram illustrating an ideal characteristic example of an optical filter for multiplexing or demultiplexing a channel signal.
[Fig. 5] Fig. 5 is a diagram illustrating a general characteristic example of an optical filter for multiplexing or demultiplexing a channel signal.
[Fig. 6] Fig. 6 is a diagram illustrating an example of a channel signal, when a main optical signal is a multicarrier signal.
[Fig. 7] Fig. 7 is a diagram illustrating an example of a WDM signal in which a plurality of channel signals having different wavelength bands are multiplexed.
[Fig. 8] Fig. 8 is a diagram illustrating an example of parameters to be managed by control circuits 111 and 211.
[Fig. 9] Fig. 9 is a diagram illustrating an example of specifications of a control optical signal to be communicated between a control signal transmission circuit 112 and a control signal reception circuit 212.
[Fig. 10] Fig. 10 is a block diagram illustrating a configuration example of an optical transmission system 20 according to a second example embodiment.
[Fig. 11] Fig. 11 is a block diagram illustrating a configuration example of an optical transmitter 50 according to a third example embodiment.
[Fig. 12] Fig. 12 is a block diagram illustrating a configuration example of an optical receiver 60 according to a fourth example embodiment.

### [Example Embodiment]

### (First Example Embodiment)

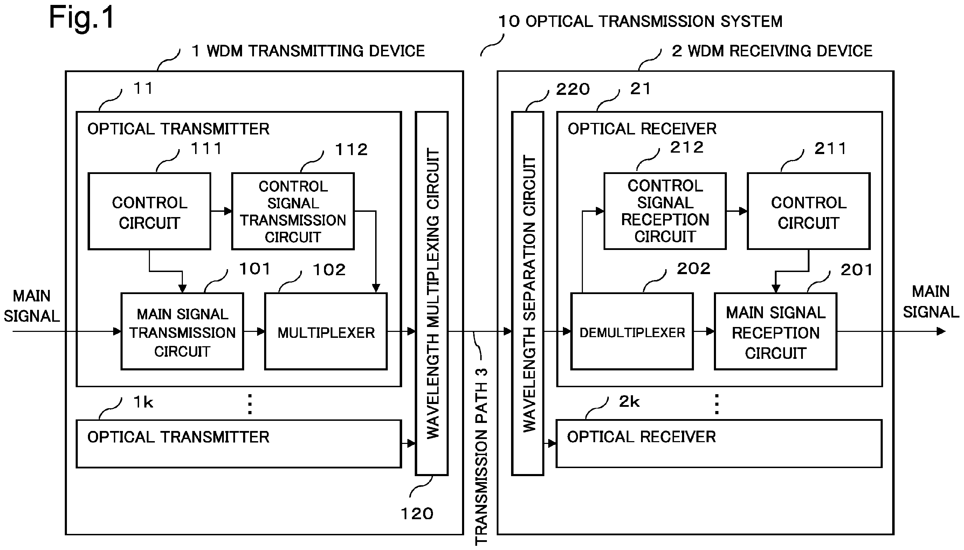

Fig. 1 is a block diagram illustrating a configuration example of an optical transmission system 10 according to a first example embodiment of the present invention. The optical transmission system 10 includes a WDM transmitting device 1 and a WDM receiving device 2. WDM is abbreviation of Wavelength Division Multiplexing. The WDM transmitting device 1 and the WDM receiving device 2 are connected by a transmission path 3. The transmission path 3 is an optical fiber. In a block diagram according to each example embodiment, an arrow indicates one example of a direction of a signal, but the direction of the signal is not limited.

### (Description on WDM Transmitting Device 1)

The WDM transmitting device 1 includes k (where k is a natural number) optical transmitters 11 to 1k, and a wavelength multiplexing circuit 120. The optical transmitter 11 to 1k is capable of generating a variety of optical transmission signals by a parameter to be set according to a performance required in the optical transmission system 10. In the present example embodiment, an optical signal transmitting function included in the optical transmitter 11 to 1k is described. Alternatively, the optical transmitter 11 to 1k may be a transponder (optical transceiver) further having a receiving function similar to an optical receiver 21 to 2k to be described later.

The optical transmitter 11 to 1k generates an optical signal including a control signal and a main signal. The main signal is a signal for transmitting user's data in the optical transmission system 10. The control signal is a signal for transmitting a parameter for controlling the WDM receiving device 2 from the WDM transmitting device 1.

Each of the optical transmitters 11 to 1k includes a main signal transmission circuit 101, a control circuit 111, a control signal transmission circuit 112, and a multiplexer 102. The main signal transmission circuit 101 converts a main signal into an optical signal suitable for wavelength multiplexing optical transmission, based on a parameter set by the control circuit 111, and outputs the optical signal. Hereinafter, the optical signal to be output from the main signal transmission circuit 101 is referred to as a "main optical signal". The main signal transmission circuit 101 is an electro-photo conversion circuit, and may include an optical modulator. The main signal transmission circuits 101 of the optical transmitters 11 to 1k respectively generate optical signals having wavelengths from λ1 to λk. Bandwidths of main optical signals to be output from the optical transmitters 11 to 1k are not necessarily the same, and do not overlap one another.

The control circuit 111 is an electric circuit for setting a parameter in the main signal transmission circuit 101 and generating a control signal including a parameter to be notified to an optical receiver opposing to an optical transmitter. The control circuit 111 controls the main signal transmission circuit 101, for example, by setting, in the main signal transmission circuit 101, a parameter for specifying a wavelength, a band, a modulation method, and the like of a main optical signal. Both of a parameter to be set in the main signal transmission circuit 101 and a parameter to be notified to an opposing optical receiver are determined in such a way that an optical transmitter and the optical receiver are communicable to each other. These parameters may differ from each other. A parameter to be notified to an optical receiver is, for example, information for setting a wavelength, a band, a modulation method, and the like of a main optical signal to be received with respect to the main signal reception circuit 201.

The control signal transmission circuit 112 converts a control signal notified from the control circuit 111 into an optical signal. Specifically, the control signal transmission circuit 112 is also an electro-photo conversion circuit. Hereinafter, an optical signal to be output from the control signal transmission circuit 112 is referred to as a "control optical signal". The multiplexer 102 generates an optical signal (hereinafter, referred to as a "channel signal") in which a main optical signal output from the main signal transmission circuit 101, and a control optical signal output from the control signal transmission circuit 112 are multiplexed, and outputs the channel signal to a wavelength multiplexing circuit 120. Each of the optical transmitters 11 to 1k has the above-described function of outputting a channel signal. Channel signals to be generated by the optical transmitters 11 to 1k are respectively discriminated as signals in which channels are different from one another.

The wavelength multiplexing circuit 120 generates a WDM signal by wavelength multiplexing channel signals generated by the optical transmitters 11 to 1k, and outputs the WDM signal to the transmission path 3. Causing the wavelength multiplexing circuit 120 to have a function of the multiplexer 102 enables the multiplexer 102 to be omitted from the optical transmitter 11 to 1k. One or both of the wavelength multiplexing circuit 120 and the multiplexer 102 may be a coupler.

### (Description on WDM Receiving Device 2)

The WDM receiving device 2 receives a WDM signal from the transmission path 3. The WDM receiving device 2 includes a wavelength separation circuit 220 and k optical receivers 21 to 2k. The wavelength separation circuit 220 separates a WDM signal received from the transmission path 3 for each channel (specifically, into a channel signal). The optical receivers 21 to 2k receive optical signals of wavelengths from λ1 to λk. Channel signals separated by the wavelength separation circuit 220 are associated with channel signals before being wavelength-multiplexed by the wavelength multiplexing circuit 120.

The optical receiver 21 to 2k is capable of receiving a variety of optical signals by setting a parameter. In the present example embodiment, an optical signal receiving function included in the optical receiver 21 to 2k is described. The optical receiver 21 to 2k may be a transponder having a transmitting function similar to the optical transmitter 11 to 1k.

The optical receiver 21 to 2k includes a main signal reception circuit 201, a demultiplexer 202, a control circuit 211, and a control signal reception circuit 212. The demultiplexer 202 demultiplexes a channel signal separated by the wavelength separation circuit 220 for each channel (specifically, for each wavelength) into a main optical signal and a control optical signal. The main signal reception circuit 201 demodulates a main signal from the main optical signal, and outputs the main signal to the outside of the WDM receiving device 2. The control signal reception circuit 212 demodulates a control signal from the control optical signal, and outputs the control signal to the control circuit 211. The control circuit 211 extracts a parameter from the control signal. The extracted parameter is a parameter included in a control signal generated by the control circuit 111 of an optical transmitter that transmits a received channel signal. Then, the control circuit 211 controls the main signal reception circuit 201, based on the extracted parameter.

In this way, a parameter for setting a function of the main signal reception circuit 201 is transmitted from the optical transmitter 11 to 1k to the optical receiver 21 to 2k for receiving the channel signal. Consequently, in the optical transmission system 10, it is possible to automatically perform, from the WDM transmitting device 1, parameter setting with respect to the optical receiver 21 to 2k of the WDM receiving device 2, without disposing a worker at the WDM receiving device 2.

The demultiplexer 202 may directly demultiplex a WDM signal into a main optical signal and a control optical signal of a channel to be received by an optical receiver included in the demultiplexer 202. In this case, it is possible to omit the wavelength separation circuit 220 from the WDM receiving device 2. Alternatively, the wavelength separation circuit 220 may further have a function of the demultiplexer 202. In this case, the wavelength separation circuit 220 outputs, to the optical receivers 21 to 2k, an optical signal in which a main optical signal and a control optical signal are separated.

### (Description on Operation of Optical Transmission System 10)

Next, an operation of the optical transmission system 10 is described in more detail by taking an example of transmission from an optical transmitter 11 to an optical receiver 21. The main signal transmission circuit 101 included in the optical transmitter 11 is capable of switching a function such as a wavelength, a bandwidth, a transmission speed, and a modulation method of a main optical signal. The control circuit 111 generates a parameter for use in switching among these functions, and sets the parameter in the main signal transmission circuit 101. Information for generating a parameter may be input from the outside of the WDM transmitting device 1 to the control circuit 111. Information for generating a parameter may be changed at any time. The control circuit 111 generates a control signal including a parameter to be set in the main signal reception circuit 201 in association with these functions, and outputs the control signal to the control signal transmission circuit 112. The control signal is a transmittable electrical signal, and, for example, an asynchronous serial digital signal.

The control signal transmission circuit 112 converts a control signal input from the control circuit 111 into a control optical signal. The control optical signal is an optical signal, and a wavelength thereof depends on a wavelength band of a main optical signal to be generated by the main signal transmission circuit 101. In the present example embodiment, a wavelength of a control optical signal is set at an end (an upper end or a lower end) of a wavelength band of a main optical signal. A main optical signal to be output from the main signal transmission circuit 101 and a control optical signal to be output from the control signal transmission circuit 112 are multiplexed by the multiplexer 102, and the multiplexed signal is output to the wavelength multiplexing circuit 120, as one channel signal.

The optical transmitter 12 to 1k also performs an operation similar to the optical transmitter 11. A wavelength band of a channel signal (specifically, an optical signal in which a main optical signal and a control optical signal are wavelength-multiplexed) to be output from each of the optical transmitters 11 to 1k is set in such a way as not to overlap one another. The wavelength multiplexing circuit 120 wavelength-multiplexes a channel signal to be output from the optical transmitter 11 to 1k, and transmits the signal to a transmission path as a WDM signal.

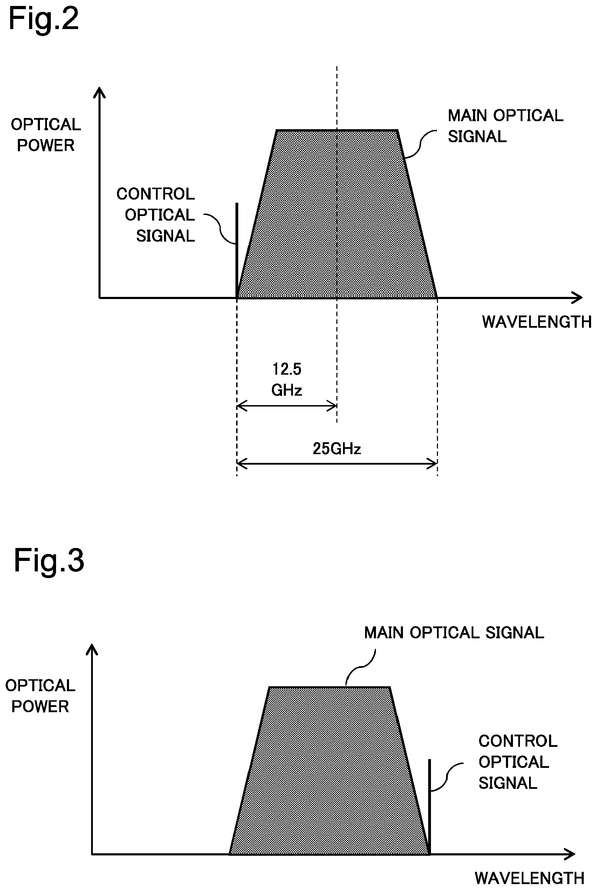

A channel signal and a WDM signal are described with reference to Figs. 2 to 7. In Figs. 2 to 7, a vertical axis indicates power of a main optical signal and a control optical signal, and a horizontal axis indicates a wavelength. Conversion among a wavelength, a bandwidth, and a frequency of an optical signal is easy. Fig. 2 illustrates an example of a spectrum in a case where a control optical signal is multiplexed at a lower end (end on a short wavelength side) of a spectrum of a main optical signal, when the main optical signal is a signal having a single wavelength band. A wavelength band (slot width) of the main optical signal is 25 GHz. When the main optical signal is disposed on a grid of 25 GHz, a position of a control optical signal is a position (where the frequency is high) away from a central frequency of the main optical signal by 12.5 GHz, and a boundary with respect to an adjacent grid on the short wavelength side. Since the control optical signal includes only control information on a low speed, the band thereof is narrow, as compared with the main optical signal. For example, a bandwidth of a control optical signal is from several kHz to several tens MHz. Therefore, in Figs. 2 to 6, a spectrum of the control optical signal becomes linear. A position (lower end of the spectrum of the main optical signal in Fig. 2) where the control optical signal is multiplexed may be set to a wavelength closest to a central wavelength of the main optical signal, as far as it is possible to ignore an influence of the control optical signal and the main signal light on transmission qualities thereof, when the main optical signal and the control optical signal are multiplexed.

Fig. 3 illustrates an example of a spectrum, when a control optical signal is multiplexed at an upper end (end on a long wavelength side) of a spectrum of a main optical signal having a slot width of 25 GHz. As illustrated in Fig. 3, the control optical signal may be multiplexed at the upper end of the spectrum of the main optical signal. Also in this case, the control optical signal may be multiplexed at a wavelength where an influence of the control optical signal and the main signal light on transmission qualities thereof can be ignored.

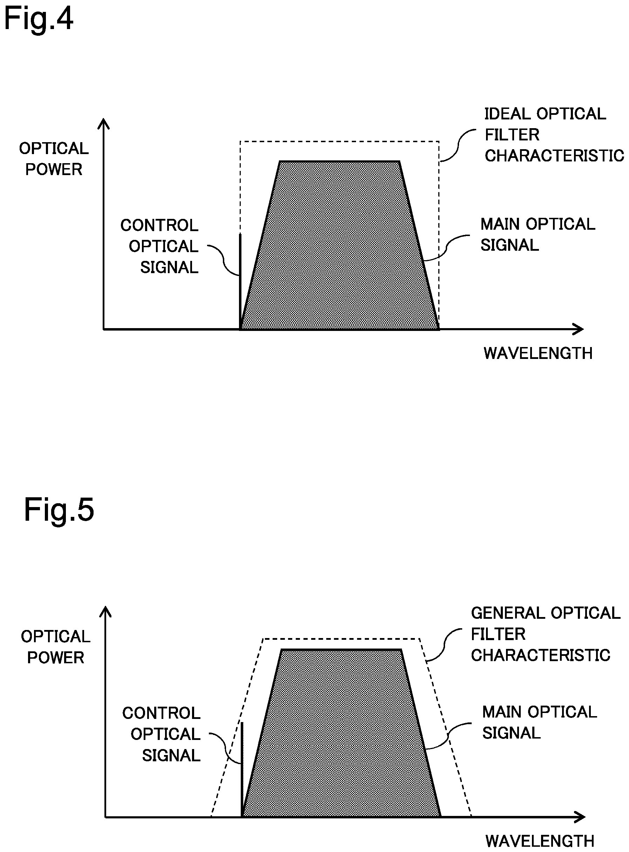

Figs. 4 and 5 are diagrams in which an example of a characteristic of an optical filter for multiplexing or demultiplexing the channel signal illustrated in Fig. 2 is added to the wavelength multiplexing circuit 120 or the wavelength separation circuit 220. In Figs. 4 and 5, regarding the optical filter characteristic, a vertical axis indicates a transmittance. A broken line in Fig. 4 indicates an example of an ideal optical filter characteristic. The optical filter is an optical band-pass filter for passing a wavelength band of a main optical signal of a target channel. By slightly expanding a wavelength bandwidth of the optical filter in Fig. 4, a control optical signal is also multiplexed into a WDM signal together with a main optical signal by the wavelength multiplexing circuit 120, or separated from a WDM signal together with a main optical signal by the wavelength separation circuit 220. Actually, a passing band of a general optical band-pass filter does not have an ideal rectangle as illustrated in Fig. 4, but is such that a slope of a transmittance characteristic spreads into a trapezoidal shape, as illustrated in Fig. 5. Therefore, the wavelength multiplexing circuit 120 and the wavelength separation circuit 220 are capable of multiplexing and demultiplexing a control optical signal by using a general optical band-pass filter.

Specifically, when a main optical signal having the wavelength band in Fig. 2 is separated by the wavelength separation circuit 220 in Fig. 1, it is possible to separate the main optical signal together with a control optical signal. Specifically, it is possible to handle a main optical signal and a control optical signal as a set of wavelength signals (one channel signal). By changing a band of the optical band-pass filter, also when a slot width of a main optical signal is different, or when a main optical signal is a multicarrier signal constituted of a plurality of carriers, it is possible to handle the main optical signal and the control optical signal as one channel signal similarly to the above. It is clear that the case illustrated in Fig. 3 in which a control optical signal is multiplexed at an upper end of a spectrum of a main optical signal is also similar to the above.

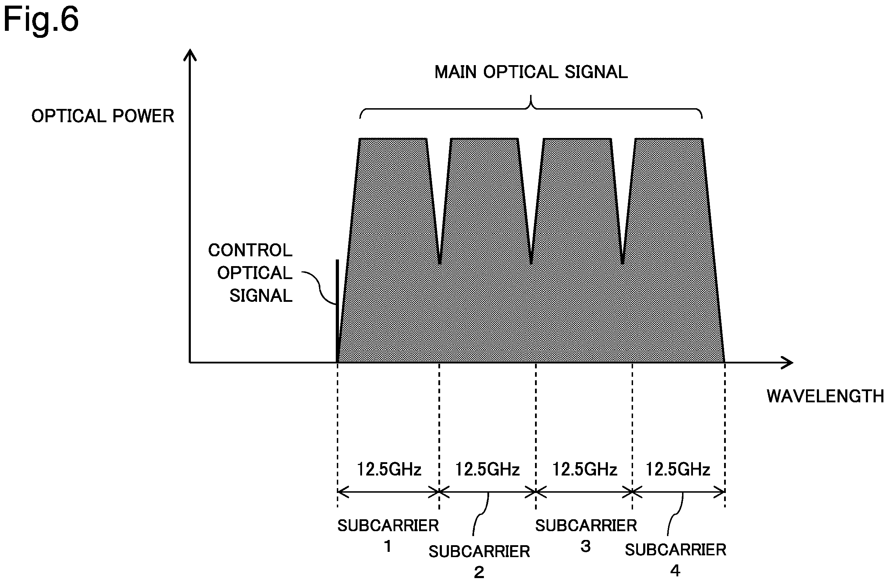

Fig. 6 is a diagram illustrating an example of a spectrum of a channel signal, when a main optical signal is a multicarrier signal. The multicarrier signal in Fig. 6 is constituted of four carriers, each of which has a slot width of 12.5 GHz. A control optical signal is wavelength-multiplexed at a lower end of a spectrum of the multicarrier signal. In the example of Fig. 6, it is possible to lower a transmission speed per carrier by parallel transmission using four waves, namely, subcarriers 1 to 4.

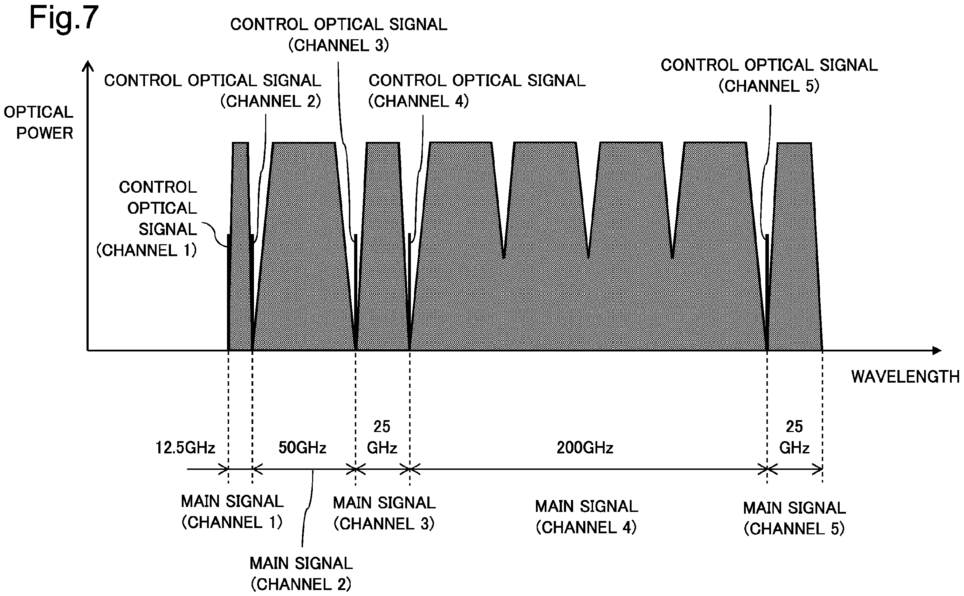

Fig. 7 is a diagram illustrating an example of a WDM signal in which a plurality of channel signals having different wavelength bands are multiplexed. Fig. 7 illustrates an example of a case where optical transmitters 11 to 15 respectively generate channel signals 1 to 5, the channel signals 1 to 5 are multiplexed by the wavelength multiplexing circuit 120, and the multiplexed signal is transmitted to optical receivers 21 to 25. Fig. 7 illustrates bandwidths of channels. Main signal light of the channel 4 includes four subcarriers, each of which has a band of 50 GHz. Each of control optical signals of the channels 2 to 4 is disposed at a wavelength of a boundary with respect to an adjacent channel signal.

Both of a bandwidth and a central frequency interval of a main optical signal included in each channel signal in Fig. 7 are an integer multiple of 6.25 GHz. In Fig. 7, bandwidths of the channel signals 1, 2, 3, 4, and 5 are respectively 12.5 GHz, 50 GHz, 25 GHz, 200 GHz, and 25 GHz. In this case, a central frequency interval between the channel signal 1 and the channel signal 2 is 31.25 GHz, and a central frequency interval between the channel signal 2 and the channel signal 3 is 37.5 GHz. A central frequency interval between the channel signal 3 and the channel signal 4 is 112.5 GHz, and a central frequency interval between the channel signal 4 and the channel signal 5 is 112.5 GHz. A control optical signal associated with a main optical signal is multiplexed at a lower end of a spectrum of each main optical signal light. Spectra of adjacent main optical signals do not overlap each other. Therefore, it is possible to ignore an influence of each information transfer signal disposed at a lower end of a spectrum of each main signal light, and each main signal light on transmission qualities thereof.

A control optical signal is transmitted together with a main optical signal as a part of a channel signal. The wavelength separation circuit 220 separates the WDM signal in Fig. 7 into channel signals, and outputs the channel signals to the optical receivers 21 to 25 for receiving associated wavelengths. Specifically, the wavelength separation circuit 220 outputs, to the optical receiver 21, a channel signal of the channel 1. Likewise, channel signals of the channels 2 to 5 are respectively output to the optical receivers 22 to 25. The number of channel signals depends on the numbers of optical transmitters and optical receivers for transmitting a main signal via the transmission path 3, and increases up to the maximum number k. A channel signal, and the optical receiver 21 to 2k for receiving the channel signal may be associated with each other by a central wavelength of a main optical signal.

The demultiplexer 202 included in the optical receiver 21 demultiplexes a channel signal input from the wavelength separation circuit 220 to the optical receiver 21 into a control optical signal and a main optical signal. The control signal reception circuit 212 demodulates a control signal from the demultiplexed control optical signal. The control circuit 211 receives the control signal from the control signal reception circuit 212, and extracts a parameter from the control signal. The parameter to be extracted is a parameter generated by the control circuit 111, and set in the main signal reception circuit 201. By causing the main signal reception circuit 201 to set the extracted parameter, the control circuit 211 controls the main signal reception circuit 201. In the main signal reception circuit 201, a main optical signal receiving function is achieved based on the set parameter. The main signal reception circuit 201 demodulates a main signal from the main optical signal demultiplexed by the demultiplexer 202. The demodulated main signal may be output to another transmission device connected to the outside of the WDM receiving device 2. The optical receiver 22 to 2k also performs an operation similar to the optical receiver 21.

Preferably, a level of a control optical signal with respect to a main optical signal may be set low in order to further reduce an influence of the control optical signal on transmission quality of the main optical signal. In this case, it is necessary for the control signal reception circuit 212 to detect a control optical signal of low power, as compared with a main optical signal. Since a frequency band of a control optical signal is sufficiently narrow, as compared with a frequency band of a main optical signal, the control signal reception circuit 212 is capable of receiving the control optical signal with high sensitivity by employing a narrow band filter. Since a control optical signal is present at a lower end of a spectrum of a main optical signal, the main signal reception circuit 202 may receive the control optical signal as noise in a band other than the band of a main signal. In this case, in the main signal reception circuit 201, a control optical signal is removed by an equalization filter, without greatly affecting transmission quality of a main optical signal.

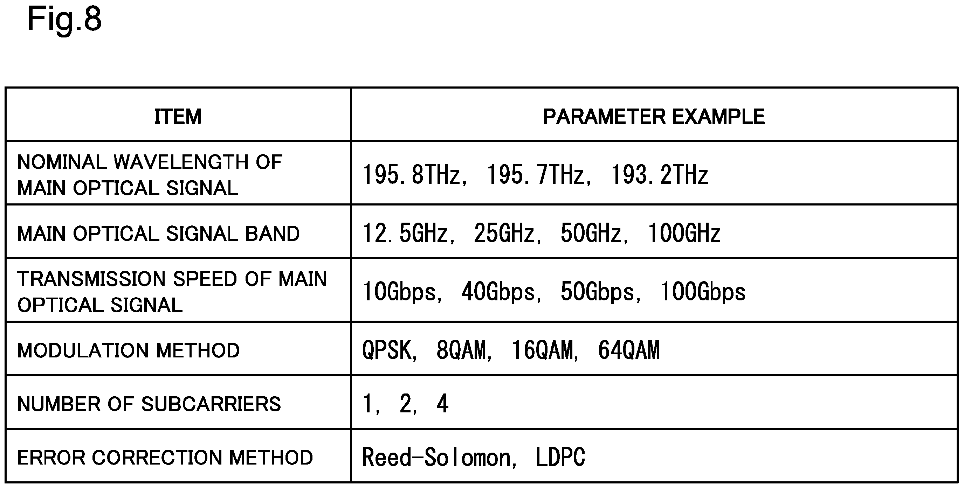

Fig. 8 is a diagram illustrating an example of parameters to be managed by the control circuits 111 and 211. As the parameters, there are a nominal wavelength, a bandwidth, a transmission speed, a modulation method, and the like of a main optical signal. Types and values of the parameters are not limited to those described in Fig. 8. It is possible to define, as parameters, settings necessary for communication among the optical transmitters 11 to 1k and the optical receivers 21 to 2k. In Fig. 8, QPSK is abbreviation of Quadrature Phase Shift Keying, QAM is abbreviation of Quadrature Amplitude Modulation, and LDPC is abbreviation of low-density parity-check code.

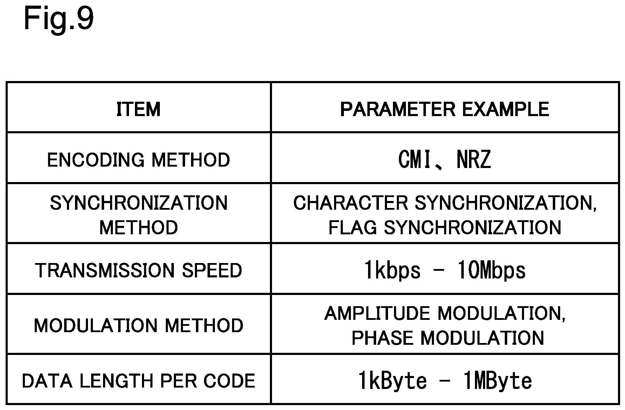

Fig. 9 is a diagram illustrating an example of parameters of a control optical signal to be communicated between the control signal transmission circuit 112 and the control signal reception circuit 212. The parameter of the control optical signal may be a fixed value that is determined in advance by specifications of the optical transmission system 10, and is not limited to the example in Fig. 9. A modulation method of the control optical signal may be amplitude modulation, phase modulation, or another modulation method. Since phase modulation has a small change in an optical output, as compared with amplitude modulation, it is possible to more advantageously reduce an influence of a control optical signal on a main optical signal by generating the control optical signal by phase modulation.

As described above, by transmitting a main optical signal and a control optical signal as one channel signal, it is possible to transmit a parameter generated by the optical transmitter 11 to 1k to the optical receiver 21 to 2k with a simple configuration. Consequently, the optical transmission system 10 according to the present example embodiment enables a function of an optical receiver to be set from an optical transmitter with a simple configuration.

### (Second Example Embodiment)

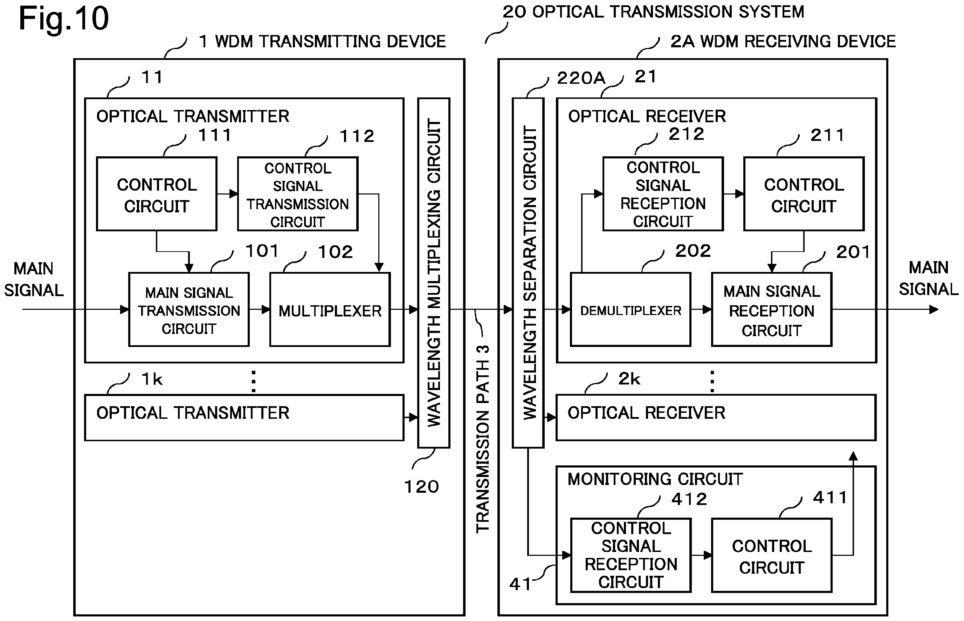

Fig. 10 is a block diagram illustrating a configuration example of an optical transmission system 20 according to a second example embodiment of the present invention. Unlike the optical transmission system 10 according to the first example embodiment, the optical transmission system 20 includes a WDM receiving device 2A in place of the WDM receiving device 2. A WDM transmitting device 1 and the WDM receiving device 2A are connected by a transmission path 3.

The WDM receiving device 2A is different from the WDM receiving device 2 in a point that a monitoring circuit 41 is included. A wavelength separation circuit 220A included in the WDM receiving device 2A splits a WDM signal with a predetermined split ratio, and inputs the signal to the monitoring circuit 41. The monitoring circuit 41 includes a control circuit 411 and a control signal reception circuit 412.

The control signal reception circuit 412 is a photoelectric conversion circuit equipped with an optical filter. The control signal reception circuit 412 receives a control optical signal included in a WDM signal input from the wavelength separation circuit 220A. When a WDM signal includes a multicarrier signal, a position of a boundary of each channel signal is not fixed. Therefore, in the control signal reception circuit 412, there is a case that it is difficult to identify each channel only by a spectrum of a WDM signal. In view of the above, the control signal reception circuit 412 has a wavelength variable optical band-pass filter. By causing the wavelength variable optical band-pass filter to sweep a wavelength that passes in a narrow band, it is possible to detect only a control optical signal for each channel. Consequently, it is possible to identify a control optical signal included in a WDM signal, and acquire a bandwidth and a parameter of a channel signal for each channel. The control signal reception circuit 412 demodulates, from the identified control optical signal, a control signal included in each of the control optical signals. The demodulated control signal is output to the control circuit 411.

The control circuit 411 extracts, from each of the demodulated control signals, a parameter for each channel signal. The control circuit 411 may acquire, from a wavelength of a detected control optical signal, information on the number of channel signals included in a WDM signal, and a bandwidth of a main optical signal of each of the channel signals. The control circuit 411 stores information such as an extracted parameter and a bandwidth of a main optical signal. The control circuit 411 may control a function of the optical receiver 21 to 2k, based on the parameter. In the optical transmission system 20 having the above-described configuration, an optical receiver of a channel capable of receiving a control optical signal by the monitoring circuit 41 does not have to include the control signal reception circuit 212 and the control circuit 211, and it is possible to simplify a configuration of the optical receiver. When the monitoring circuit 41 is capable of detecting control optical signals of all channel signals to be received by the WDM receiving device 2A, the optical receiver 21 to 2k does not have to include the control signal reception circuit 212 and the control circuit 211.

Alternatively, the optical receiver 21 to 2k may receive control from any one of the control circuit 211 and the control circuit 411. In this case, a parameter extraction function of the optical transmission system 20 is made redundant.

### (Third Example Embodiment)

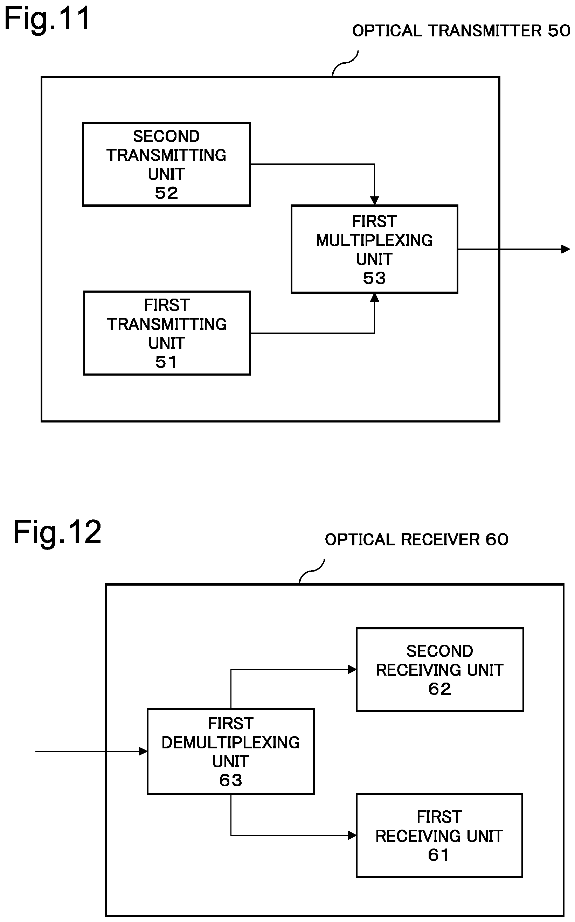

Fig. 11 is a block diagram illustrating a configuration example of an optical transmitter 50 according to a third example embodiment of the present invention. The optical transmitter 50 includes a first transmitting unit 51, a second transmitting unit 52, and a first multiplexing unit 53. The first transmitting unit 51 generates a first optical signal including a main signal. The second transmitting unit 52 generates a second optical signal including a control signal. The first multiplexing unit 53 generates a channel signal in which the second optical signal is wavelength-multiplexed at one end of a wavelength band of the first optical signal. Since the optical transmitter 50 having the above-described configuration is such that a second optical signal including a control signal is wavelength-multiplexed at one end of a wavelength band of a first optical signal, it is possible to transmit, to an optical receiver, the control signal as a channel signal being the same as a main signal. Consequently, the optical transmitter 50 is capable of setting a function of an optical receiver with a simple configuration by using a control signal generated by the optical transmitter 50.

### (Fourth Example Embodiment)

Fig. 12 is a block diagram illustrating a configuration example of an optical receiver 60 according to a fourth example embodiment of the present invention. The optical receiver 60 includes a first receiving unit 61, a second receiving unit 62, and a first demultiplexing unit 63. The first demultiplexing unit 63 demultiplexes, from a received channel signal, a first optical signal including a main signal, and a second optical signal being wavelength-multiplexed at one end of a wavelength band of the first optical signal and including a control signal. The first receiving unit 61 demodulates the main signal from the first optical signal. A function of the first receiving unit 61 is set based on the control signal. The second receiving unit 62 demodulates the control signal.

The optical receiver 60 having the above-described configuration receives an optical signal in which a first optical signal including a main signal, and a second optical signal including a control signal are wavelength-multiplexed. Since the second optical signal is wavelength-multiplexed at one end of a wavelength band of the first optical signal, the optical receiver 60 is capable of receiving the first and second optical signals as a same channel signal. Therefore, the optical receiver 60 is capable of setting a function of the optical receiver 60 with a simple configuration by using a control signal generated by an optical transmitter.

The example embodiments according to the present invention may also be described as the following supplementary notes, but are not limited to these supplementary notes.

### (Supplementary Note 1)

An optical transmitter including:
a first transmitting means for generating a first optical signal including a main signal;
a second transmitting means for generating a second optical signal including a control signal; and
a first multiplexing means for generating a channel signal in which the second optical signal is wavelength-multiplexed at one end of a wavelength band of the first optical signal.

### (Supplementary Note 2)

The optical transmitter according to supplementary note 1, wherein
the control signal includes a parameter for use in setting a function of an optical receiver that receives the channel signal.

### (Supplementary Note 3)

The optical transmitter according to supplementary note 1 or 2, wherein
a band of the second optical signal is narrower than a band of the first optical signal.

### (Supplementary Note 4)

The optical transmitter according to any one of supplementary notes 1 to 3, wherein
peak power of the second optical signal is smaller than peak power of the first optical signal.

### (Supplementary Note 5)

The optical transmitter according to any one of supplementary notes 1 to 4, wherein
the first optical signal is a multicarrier signal.

### (Supplementary Note 6)

The optical transmitter according to any one of supplementary notes 1 to 5, wherein
at least one of a central frequency and a bandwidth of the first optical signal complies with International Telecommunication Union Telecommunication Standardization Sector (ITU-T) Recommendation G.694.1.

### (Supplementary Note 7)

A wavelength multiplexing transmitting device including:
a plurality of the optical transmitters according to any one of supplementary notes 1 to 6 that output the channel signals in which wavelength bands do not overlap each other; and
a second multiplexing means for multiplexing channels to be output from a plurality of the optical transmitters, and outputting a wavelength-multiplexed signal.

### (Supplementary Note 8)

An optical receiver including:
a first demultiplexing means for demultiplexing, from a received channel signal, a first optical signal including a main signal, and a second optical signal being wavelength-multiplexed at one end of a wavelength band of the first optical signal and including a control signal;
a first receiving means, being controlled based on the control signal, for demodulating a main signal from the first optical signal; and
a second receiving means for demodulating the control signal from the second optical signal.

### (Supplementary Note 9)

The optical receiver according to supplementary note 8, wherein
the control signal includes a parameter for use in setting a function of the first receiving means.

### (Supplementary Note 10)

The optical receiver according to supplementary note 8 or 9, wherein
the first demultiplexing means demultiplexes, from the channel signal, the second optical signal by using an optical filter having a band narrower than a band of the first optical signal.

### (Supplementary Note 11)

The optical receiver according to any one of supplementary notes 8 to 10, wherein
the first optical signal is a multicarrier signal.

### (Supplementary Note 12)

The optical receiver according to any one of supplementary notes 8 to 11, wherein
at least one of a central frequency and a bandwidth of the first optical signal complies with ITU-T Recommendation G.694.1.

### (Supplementary Note 13)

A wavelength multiplexing receiving device including:
a second demultiplexing means for demultiplexing a wavelength-multiplexed signal in which a plurality of the channel signals are wavelength-multiplexed, and outputting a plurality of the channel signals; and
a plurality of the optical receivers according to any one of supplementary notes 8 to 12 that receive the demultiplexed channel signals.

### (Supplementary Note 14)

The wavelength multiplexing receiving device according to supplementary note 13, further including
a monitoring means for extracting, from the wavelength-multiplexed signal, a plurality of parameters being associated with the plurality of channel signals, and setting the extracted parameters in the first receiving means.

### (Supplementary Note 15)

An optical transmission system in which the wavelength multiplexing transmitting device according to supplementary note 7, and the wavelength multiplexing receiving device according to supplementary note 13 or 14 are communicably connected by a transmission path.

### (Supplementary Note 16)

A transponder including the optical transmitter according to any one of supplementary notes 1 to 5, and the optical receiver according to any one of supplementary notes 8 to 12.

### (Supplementary Note 17)

An optical transmitting method including:
generating a first optical signal including a main signal;
generating a second optical signal including a control signal; and
generating a channel signal in which the second optical signal is wavelength-multiplexed at one end of a wavelength band of the first optical signal.

### (Supplementary Note 18)

An optical receiving method including:
demultiplexing, from a received channel signal, a first optical signal including a main signal, and a second optical signal being wavelength-multiplexed at one end of a wavelength band of the first optical signal and including a control signal;
demodulating the control signal from the second optical signal; and
demodulating a main signal from the first optical signal, based on the control signal.

While the invention has been particularly shown and described with reference to example embodiments thereof, the invention is not limited to these example embodiments. It will be understood by those of ordinary skill in the art that various changes in form and details may be made therein without departing from the spirt and scope of the present invention as defined by the claims.

Further, configurations described in the example embodiments are not necessarily exclusive to one another. An operation and an advantageous effect of the present invention may be achieved by a configuration in which all or a part of the above-described example embodiments are combined.

Functions of the WDM transmitting device 1, the WDM receiving device 2, and the WDM receiving device 2A described in the above-described example embodiments may be achieved by causing a central processing unit (CPU) provided in each of the devices to execute a program. The program is recorded in a fixed non-transitory recording medium. As the recording medium, a semiconductor memory or a fixed magnetic disk device is used. However, the recording medium is not limited to these devices. The CPU is, for example, a computer included in the control circuit 111, 211, or 411. The CPU may be provided outside of the control circuit 111, 211, or 411.

This application is based upon and claims the benefit of priority from Japanese patent application No. 2018-181820, filed on September 27, 2018, the disclosure of which is incorporated herein in its entirety by reference.

### [Reference signs List]

- 1: WDM transmitting device
- 2, 2A: WDM receiving device
- 3: Transmission path
- 10, 20: Optical transmission system
- 11 to 1k, 50: Optical transmitter
- 120: Wavelength multiplexing circuit
- 101: Main signal transmission circuit
- 102: Multiplexer
- 111, 211, 411: Control circuit
- 112: Control signal transmission circuit
- 21 to 2k: Optical receiver
- 220, 220A: Wavelength separation circuit
- 201: Main signal reception circuit
- 202: Demultiplexer
- 212, 412: Control signal reception circuit
- 41: Monitoring circuit
- 51: First transmitting unit
- 52: Second transmitting unit
- 53: First multiplexing unit
- 61: First receiving unit
- 62: Second receiving unit
- 63: First demultiplexing unit

## Claims

1. An optical transmitter comprising:
first transmitting means for generating a first optical signal including a main signal;
second transmitting means for generating a second optical signal including a control signal; and
first multiplexing means for generating a channel signal in which the second optical signal is wavelength-multiplexed at one end of a wavelength band of the first optical signal.

2. The optical transmitter according to claim 1, wherein
the control signal includes a parameter for use in setting a function of an optical receiver that receives the channel signal.

3. The optical transmitter according to claim 1 or 2, wherein
a band of the second optical signal is narrower than a band of the first optical signal.

4. The optical transmitter according to any one of claims 1 to 3, wherein
peak power of the second optical signal is smaller than peak power of the first optical signal.

5. The optical transmitter according to any one of claims 1 to 4, wherein
the first optical signal is a multicarrier signal.

6. The optical transmitter according to any one of claims 1 to 5, wherein
at least one of a central frequency and a bandwidth of the first optical signal complies with International Telecommunication Union Telecommunication Standardization Sector (ITU-T) Recommendation G.694.1.

7. A wavelength multiplexing transmitting device comprising:
a plurality of the optical transmitters according to any one of claims 1 to 6 that output the channel signals in which wavelength bands do not overlap each other; and
second multiplexing means for multiplexing channels to be output from the plurality of optical transmitters, and outputting a wavelength-multiplexed signal.

8. An optical receiver comprising:
first demultiplexing means for demultiplexing, from a received channel signal, a first optical signal including a main signal, and a second optical signal being wavelength-multiplexed at one end of a wavelength band of the first optical signal and including a control signal;
first receiving means, being controlled based on the control signal, for demodulating a main signal from the first optical signal; and
second receiving means for demodulating the control signal from the second optical signal.

9. The optical receiver according to claim 8, wherein
the control signal includes a parameter for use in setting a function of the first receiving means.

10. The optical receiver according to claim 8 or 9, wherein
the first demultiplexing means demultiplexes, from the channel signal, the second optical signal by using an optical filter having a band narrower than a band of the first optical signal.

11. The optical receiver according to any one of claims 8 to 10, wherein
the first optical signal is a multicarrier signal.

12. The optical receiver according to any one of claims 8 to 11, wherein
at least one of a central frequency and a bandwidth of the first optical signal complies with ITU-T Recommendation G.694.1.

13. A wavelength multiplexing receiving device comprising:
second demultiplexing means for demultiplexing a wavelength-multiplexed signal in which a plurality of the channel signals are wavelength-multiplexed, and outputting a plurality of the channel signals; and
a plurality of the optical receivers according to any one of claims 8 to 12 that receive the demultiplexed channel signals.

14. The wavelength multiplexing receiving device according to claim 13, further comprising
monitoring means for extracting, from the wavelength-multiplexed signal, a plurality of parameters being associated with the plurality of channel signals, and setting the extracted parameters in the first receiving means.

15. An optical transmission system in which the wavelength multiplexing transmitting device according to claim 7, and the wavelength multiplexing receiving device according to claim 13 or 14 are communicably connected by a transmission path.

16. A transponder comprising the optical transmitter according to any one of claims 1 to 5, and the optical receiver according to any one of claims 8 to 12.

17. An optical transmitting method comprising:
generating a first optical signal including a main signal;
generating a second optical signal including a control signal; and
generating a channel signal in which the second optical signal is wavelength-multiplexed at one end of a wavelength band of the first optical signal.

18. An optical receiving method comprising:
demultiplexing, from a received channel signal, a first optical signal including a main signal, and a second optical signal being wavelength-multiplexed at one end of a wavelength band of the first optical signal and including a control signal;
demodulating the control signal from the second optical signal; and
demodulating a main signal from the first optical signal, based on the control signal.
